# EUROPEAN PATENT APPLICATION

(11) **EP 2 692 548 A2**
(43) Date of publication of application: **05.02.2014**
(21) Application number: 13178369.8
(22) Date of filing: 29.07.2013
(51) Int. Cl.: B60C 23/00, B60C 23/12

(54) **Pneumatic tire comprising an embedded rigid structure and method of manufacturing**

(30) Priority: 30.07.2012 US 201213561123
(71) Applicant: The Goodyear Tire & Rubber Company, Akron, Ohio 44316 (US)
(72) Inventor: Frantzen, Andreas, D-54292 Trier (DE); Beck, Raphael, L-8558 Reichlange (LU)
(74) Representative: Kutsch, Bernd

(57) **Abstract**

A pneumatic tire is disclosed comprising a cavity (40), a first and a second sidewall (30, 32) extending respectively from a first and a second tire bead region (34, 36) to a tire tread region (38), the first sidewall having at least one bending region operatively bending when radially within a rolling tire footprint (120); a sidewall groove (56) defined by groove walls positioned within the bending region of the first tire sidewall (30), the sidewall groove (56) operatively deforming segment by segment between a non-deformed state and a deformed, constricted state in response to a bending of the bending region of the first sidewall (30) while radially within the rolling tire footprint (120); an air passageway (43) defined by the sidewall groove or located within the sidewall groove (56) and operatively deforming segment by segment between an expanded condition and an at least partially collapsed condition in response to respective segment by segment deformation of the sidewall groove (56) when radially within the rolling tire footprint (120); and a rigid structure (14, 42, 68, 70, 101) wherein the rigid structure (14, 42, 68, 70, 101) is bonded to the tire (12) by a compound cement.

## Description

### Field of the Invention

The invention relates generally to adhesive bonding for a pneumatic tire and, more specifically, to adhesive bonding of a pumping assembly to a pneumatic tire.

### Background

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependant upon the driver taking remedial action when warned to re-inflate a tire to recommended pressure. It is a desirable, therefore, to incorporate an air maintenance feature within a tire that will maintain air pressure within the tire in order to compensate for any reduction in tire pressure over time without the need for driver intervention.

### Summary

The mention relates to a pneumatic tire in accordance with claim 1 and to a method in accordance with claim 13.

Dependent claims refer to preferred embodiments of the invention.

In one embodiment of the present invention, a pneumatic tire assembly comprises
a tire having a pneumatic cavity, first and second sidewalls extending respectively from first and second tire bead regions to a tire tread region with the first sidewall having at least one bending region operatively bending when radially within a rolling tire footprint, a rigid structure for facilitating operation of the tire assembly with the rigid structure being bonded to the tire by a compound cement of high stiffness such that a stiffness gradient is created between the structure and the tire, and a sidewall groove defined by groove walls positioned within the bending region of the first tire sidewall. The sidewall groove deforms segment by segment between a non-deformed state and a deformed, constricted state in response to bending of the bending region of the first sidewall while radially within the rolling tire footprint. An air passageway is defined by the sidewall groove and deforms segment by segment between an expanded condition and an at least partially collapsed condition in response to respective segment by segment deformation of the sidewall groove when radially within the rolling tire footprint.

According to one aspect of the invention, the rigid structure may be constructed of polyamide.

According to another aspect of the invention, the rigid structure and the tire may define a built-in tube-like cavity.

According to yet another aspect of the invention, the rigid structure and the tire may reroute pressurized air to a pump assembly, and from there, into the pneumatic cavity.

According to still another aspect of the invention, a subcoat may be applied to a bare surface of the rigid structure.

According to yet another aspect of the invention, a topcoat may be applied to the subcoat.

According to still another aspect of the invention, the compound cement is preferably applied to the topcoat.

According to yet another aspect of the invention, the subcoat is preferably dried to the bare surface of the rigid structure at for instance 180C for 8 min.

According to still another aspect of the invention, the topcoat is preferably dried to the subcoat of the rigid structure at for instance 180C for 8 min.

According to yet another aspect of the invention, the compound cement is preferably prepared from a homogenous slurry in a solvent over the topcoat.

In another embodiment of the present invention, a tire assembly comprises a tire having a pneumatic cavity, first and second sidewalls extending respectively from first and second tire bead regions to a tire tread region with the first sidewall having at least one bending region operatively bending when radially within a rolling tire footprint, a rigid structure for facilitating operation of the tire assembly with the rigid structure being bonded to the tire by a compound cement of high stiffness such that a stiffness gradient is created between the structure and the tire, and a sidewall groove defined by groove sidewalls positioned within the bending region of the first tire sidewall. The sidewall groove deforms segment by segment between a non-deformed state and a deformed, constricted state in response to the bending of the first sidewall bending region being radially within the rolling tire footprint. An air passageway is defined by the sidewall groove. The air passageway resiliently deforms segment by segment between an expanded condition and an at least partially collapsed condition in response to respective segment by segment deformation of the sidewall groove when radially within the rolling tire footprint.

According to one aspect of the invention, a separate tube may be disposed within the sidewall groove, the separate tube preferably defining a circular air passageway.

According to still another aspect of the invention, the separate tube preferably has an outer profile corresponding to an inner profile of the sidewall groove.

According to yet another aspect of the invention, the rigid structure may comprise a plurality of check valves disposed at multiple arcuate positions about the sidewall groove.

According to still another aspect of the invention, the compound cement may secure the separate tube within the sidewall groove, the compound cement further securing the plurality of check valves to the separate tube.

### Definitions

"Axial" and "axially" means lines or directions that are parallel to the axis of rotation of the tire.

"Circumferential" means lines or directions extending along the perimeter of the surface of the annular tread perpendicular to the axial direction.

"Footprint" means the contact patch or area of contact of the tire tread with a flat surface at zero speed and under normal load and pressure.

"Groove" means an elongated void area in a tire dimensioned and configured in section for receipt of or for forming an air tube therein.

"Inboard side" means the side of the tire nearest the vehicle when the tire is mounted on a wheel and the wheel is mounted on the vehicle.

"Lateral" means an axial direction.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
Fig-1; Isometric exploded view of an example tire and tube assembly.
Fig-2; Side view of the example tire/tube assembly.
Fig-3A-3C; Details of an example outlet connector.
Fig-4A-4E; Details of an example inlet (filter) connector.
Fig-5A; Side view of an example tire rotating with air movement (84) to cavity.
Fig-5B; Side view of the example tire rotating with air flushing out filter.
Fig-6A; Section view taken from Fig-5A.
Fig-6B; Enlarged detail of tube area taken from Fig-6A, sidewall in non-compressed state.
Fig-7A; Section view taken from Fig-5A.
Fig-7B; Enlarged detail of tube area taken from Fig-7A, sidewall in compressed state.
Fig-8A; Enlarged detail of an example tube & groove detail taken from Fig-2.
Fig-8B; Detail showing an example tube compressed and being inserted into the groove.
Fig-8C; Detail showing an example tube fully inserted into the groove at a ribbed area of the groove.
Fig-8D; Exploded fragmented view of tube being inserted into a ribbed groove.
Fig-9; Enlarged detail taken from Fig-2 showing an example rib profile area located on both sides of the outlet to a cavity connector.
Fig-10A; Enlarged detail of the groove with the example rib profile.
Fig-10B; Enlarged detail of tube pressed into the example rib profile.
Fig-11; Enlarged detail taken from Fig-2 showing another example rib profile area located on both sides of the outlet to a cavity connector.
Fig-12A; Enlarged detail of the groove with the other example rib profile.
Fig-12B; Enlarged detail of the tube pressed into the other example rib profile.
Fig-13A; Enlarged view of another example tube & groove detail.
Fig-13B; Detail showing tube from Fig-13A being compressed and inserted into the groove.
Fig-13C; Detail showing the tube from Fig-13A fully inserted into the groove.
Fig-14A; Enlarged view of a third example tube & groove detail.
Fig-14B; Detail showing tube from Fig-14A being compressed and inserted into the groove.
Fig-14C; Detail showing the tube from Fig-14A fully inserted into the groove.
Fig-15A; Enlarged view of a fourth example tube & groove detail.
Fig-15B; Detail showing tube from Fig-15A being compressed and inserted into the groove.
Fig-15C; Detail showing the tube from Fig-15A fully inserted into the groove.

### Detailed Description of Examples of the Present Invention

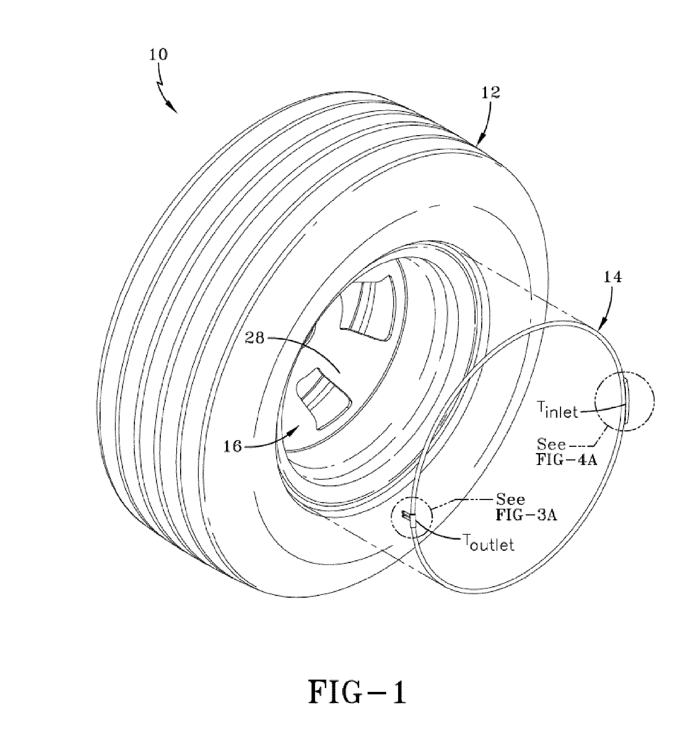

Referring to FIGS. 1, 2, and 6A, an example tire assembly 10 includes a tire 12, a peristaltic pump assembly 14, and a tire rim 16. The tire may mount in conventional fashion to a pair of rim mounting surfaces 18, 20 adjacent outer rim flanges 22, 24. The rim flanges 22, 24 each have a radially outward facing flange end 26. A rim body 28 may support the tire assembly 10 as shown. The tire 12 may be of conventional construction, having a pair of sidewalls 30, 32 extending from opposite bead areas 34, 36 to a crown or tire tread region 38. The tire 12 and rim 16 encloses a tire cavity 40.

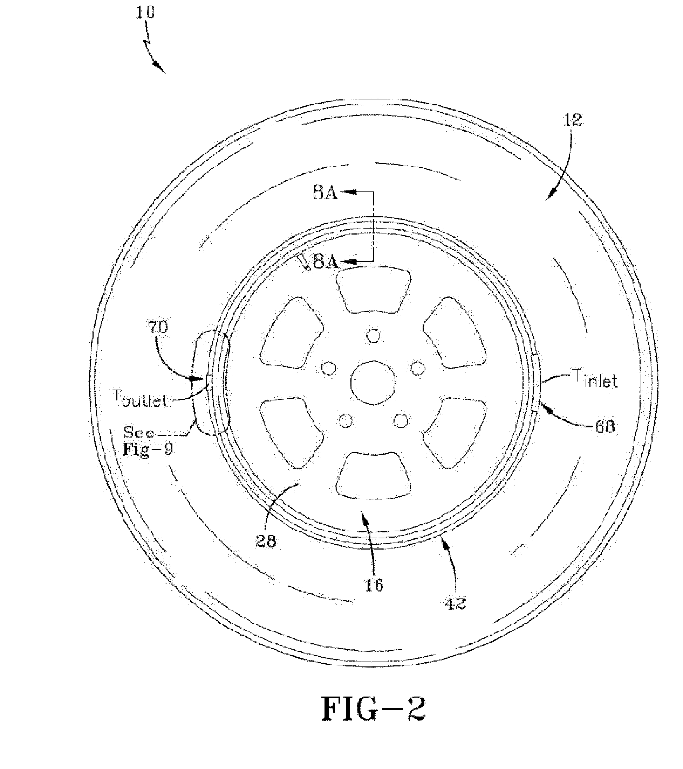

As seen from FIGS. 2 and 3A, 3B, 3C, 6B and 8A, the example peristaltic pump assembly 14 includes an annular air tube 42 that encloses an annular passageway 43. The tube 42 may be formed of a resilient, flexible material such as plastic or rubber compounds that are capable of withstanding repeated deformation cycles of a flattened condition subject to external force and, upon removal of such force, returned to an original condition generally circular in cross-section. The tube 42 has a diameter sufficient to operatively pass a volume of air for purposes described herein and allowing a positioning of the tube in an operable location within the tire assembly 10 as will be described below. In the example configuration shown, the tube 42 is an elongate, generally elliptical shape in cross-section, having opposite tube sidewalls 44, 46 extending from a flat (closed) trailing tube end 48 to a radiussed (open) leading tube end 50. The tube 42 may have a longitudinal outwardly projecting pair of locking detent ribs 52 of generally semi-circular cross-section and each rib extending along outward surfaces of the sidewalls 44, 46, respectively.

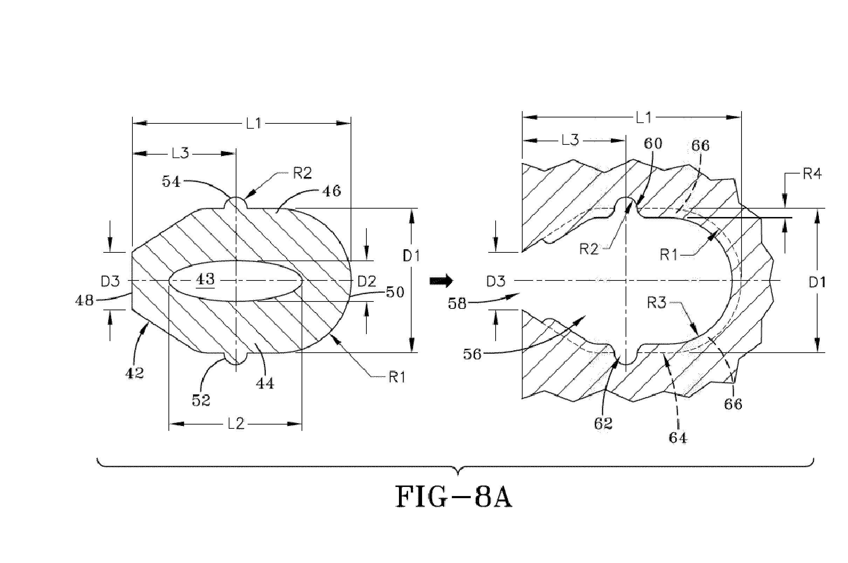

As referenced in FIG 8A, the tube 42 may have a length L1 within a range of 3.65 mm to 3.80 mm; a width of D1 within a range of 2.2 mm to 3.8 mm; a trailing end width of D3 within a range of 0.8 mm to 1.0 mm. The protruding detent ribs 52, 54 may each have a radius of curvature R2 within a range of 0.2 mm to 0.5 mm and each rib may be located at a position distance L3 within a range of 1.8 mm to 2.0 mm of the trailing tube end 48. The leading end 50 of the tube 42 may have a radius R1 within a range of 1.1 mm to 1.9 mm. The air passageway 43 within the tube 42 may likewise be generally elliptical with a length L2 within a range of 2.2 mm to 2.3 mm; and a width D2 within a range of 0.5 mm to 0.9 mm.

The tube 42 may be profiled and geometrically configured for insertion into a groove 56. The groove 56 may have an elongate, generally elliptical configuration with a length L1 within a range of 3.65 mm to 3.80 mm complementary to the elliptical shape of the tube 42. The groove 56 may include a restricted narrower entryway 58 having a nominal cross-sectional width D3 within a range of 0.8 mm to 1.0 mm. A pair of groove-rib receiving axial detent channels 60, 62 of semi-circular configuration may be formed within opposite sides of the groove 56 for corresponding receipt of the tube locking ribs 52, 54, respectively. The channels 60, 62 may be spaced approximately a distance L3 within a range of 1.8 mm to 2.0 mm of the groove entryway 58. Detent channels 60, 62 may each have a radius of curvature R2 within a range of 0.2 mm to 0.5 mm. An inward detent groove portion 64 may be formed with a radius of curvature R1 within a range of 1.1 mm to 1.9 mm and a cross-sectional nominal width D1 within a range of 2.2 mm to 3.8 mm.

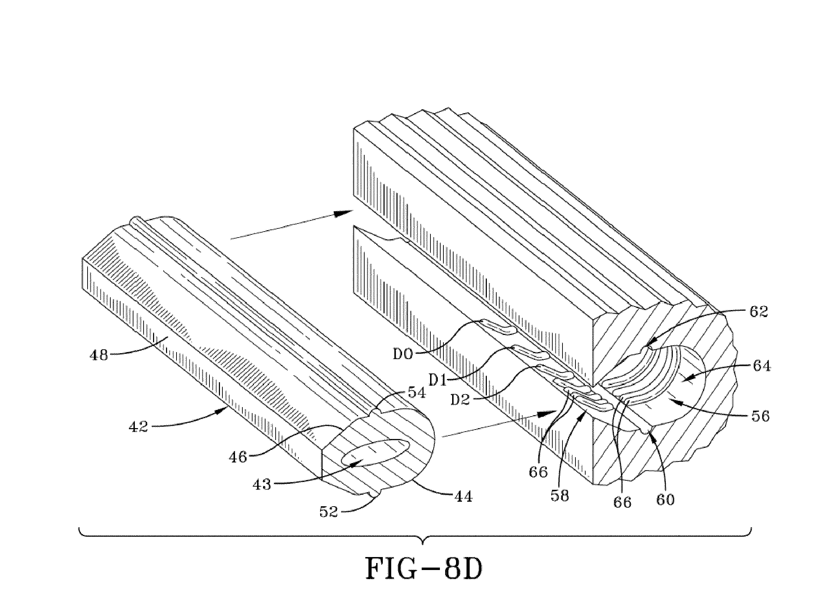

As best seen from FIGS. 8D, 9, 10A and 10B, the tire 12 may further form one or more compression ribs 66 extending the circumference of, and projecting into, the groove 56. The ribs 66 may form a pattern of ribs of prescribed pitch, frequency, and location, as described below. For the purpose of explanation, seven compression ribs may be referred to generally by numeral 66 in the first rib profile pattern shown, and specifically by the rib designations D0 through D6. The ribs D0 through D6 may be formed in a sequence and pitch pattern in order to optimize the pumping of air through the tube passageway 43. The ribs 66 may each have a unique and predetermined height and placement within the pattern and, as shown in FIG. 8D, project outward into the groove 56 at a radius R3 (FIG. 8A) within a range of 0.95 mm to 1.60 mm.

With reference to FIGS. 1, 2, 3A through 3C, and 4A through E, the peristaltic pump assembly 14 includes an inlet device 68 and an outlet device 70 preferably spaced apart approximately 180 degrees at respective locations along the circumferential air tube 42. The example outlet device 70 preferably has a T-shaped configuration in which conduits 72, 74 direct air to, and from, the tire cavity 40. An outlet device housing 76 contains conduit arms 78, 80 that integrally extend from respective conduits 72, 74. Each of the conduit arms 78, 80 have external coupling ribs 82, 84 for retaining the conduits within disconnected ends of the air tube 42 in the assembled condition. The housing 76 is preferably formed having an external geometry that complements the groove 56 and includes a flat end 86, a radiused generally oblong body 88, and outwardly projecting longitudinal detent ribs 90. The housing 76 may thus be capable of close receipt into the groove 56 at its intended location with the ribs 90 registering within the groove 56 as represented in FIG. 8A.

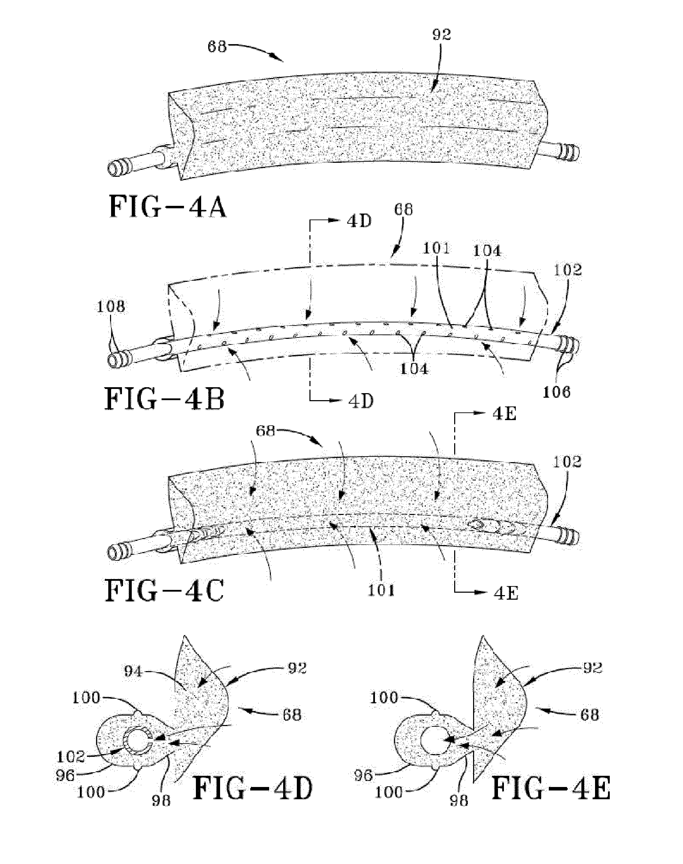

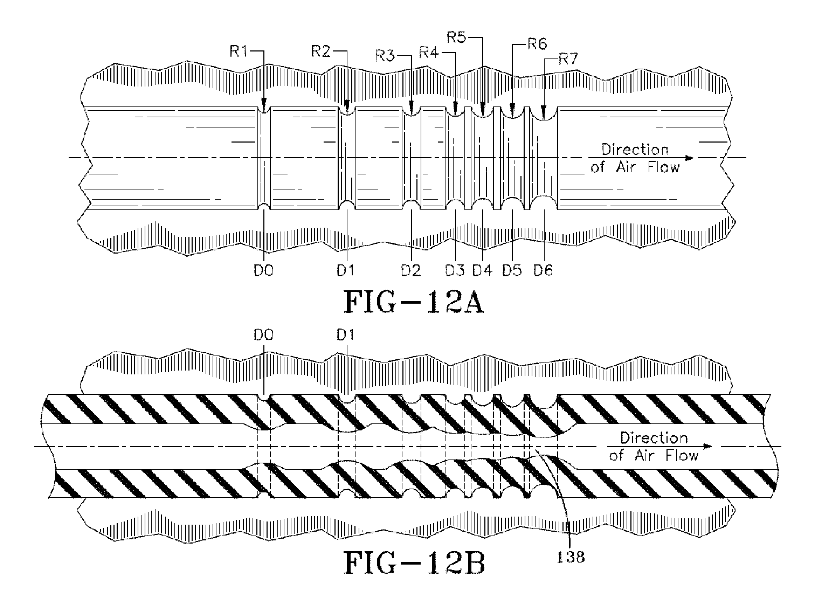

The inlet device 68, as seen in FIGS. 12, 4A through 4E, may include an elongate outward sleeve body 94 joining an elongate inward sleeve body 96 at a narrow sleeve neck 98. The outward sleeve body is generally triangular in section. The inward sleeve body 96 has an oblong external geometry complementary to the groove 56 and includes a pair of detent ribs 100 extending longitudinally along the inward sleeve body. An elongate air entry tube 101 is positioned within the inward sleeve body 96 and includes opposite tube ends 102 and a pattern of entry apertures 104 extending into a central tube passageway. External ribs 106, 108 secure the tube ends 102 in the air tube 42 opposite the outlet device 70.

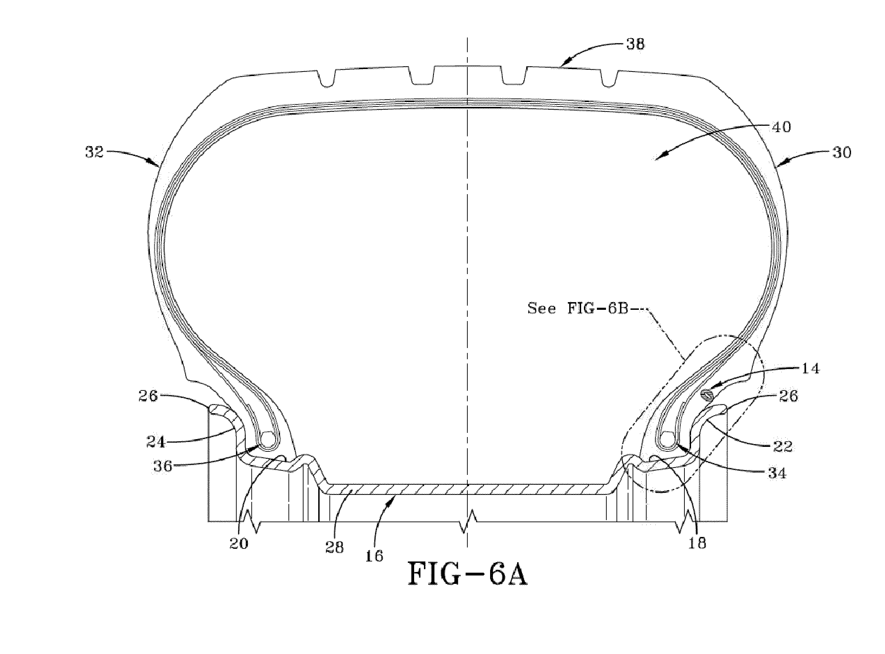

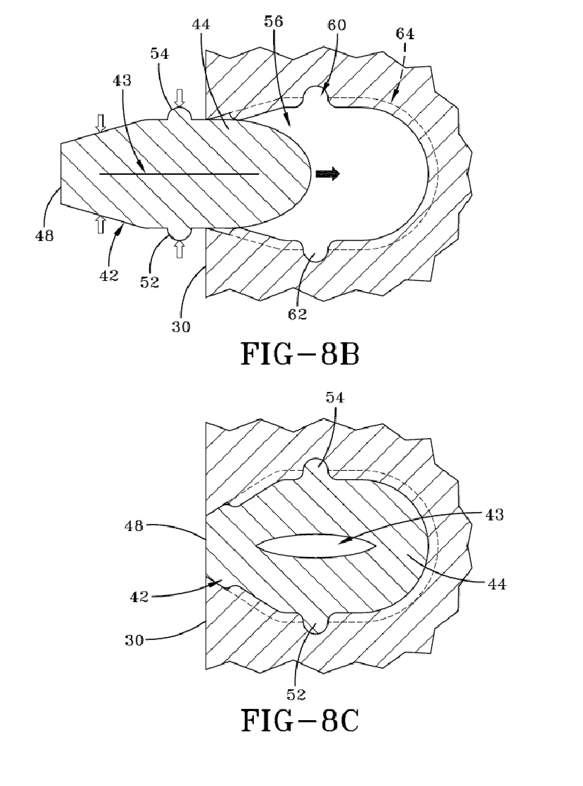

As shown in FIGS. 6A, 6B, 7A, 7B, 8A through D, the pump assembly 14 may comprise the air tube 42 and inlet and outlet devices 68, 70 affixed in-line to the air tube at respective locations 180 degrees apart when inserted into the groove 56. The groove 56 may be located at a lower sidewall region of the tire 12 that, when the tire is mounted to the rim 16, positions the air tube 42 above the rim flange ends 26. FIG. 8B shows the air tube 42 diametrically squeezed and collapsed to accommodate insertion into the groove 56. Upon full insertion, as shown in FIG. 8C, the ribs 52, 54 may register within the groove channels 60, 62 and the flat outer end 48 of the tube 42 may be generally coplanar with the outer surface of the sidewall of the tire. Once fully inserted, the air passageway 43 of the tube 42 may elastically restore itself into an open condition to allow the flow of air along the tube during operation of the pump.

Referring to FIGS. 1, 2, 5A, 5B, 6A, 6B, 7A, 7B, 8A through 8D, the inlet device 68 and the outlet device 70 may be positioned within the circumference of the circular air tube 42 generally 180 degrees apart. The tire 12 with the tube 42 positioned within groove 56 rotates in a direction of rotation 110, causing a footprint 120 to be formed against the ground surface 118. A compressive force 124 is directed into the tire 12 from the footprint 120 and acts to flatten a segment of the air tube passageway 43 opposite the footprint 120, as shown at numeral 122. Flattening of a segment of the passageway 43 forces air from the segment along the tube passageway 43 in the direction shown by arrow 116, toward the outlet device 70.

As the tire 12 continues to rotate in the direction 110 along the ground surface 118, the tube 42 may be sequentially flattened or squeezed opposite the tire footprint, segment by segment, in a direction opposite to the direction 110. A sequential flattening of the tube passageway 43, segment by segment, may cause evacuated air from the flattened segments to be pumped in the direction 116 within tube passageway 43 toward the outlet device 70. Air may flow through the outlet device 70 and to the tire cavity 40, as shown at 130. At 130, air exiting the outlet device 70 may be routed to the tire cavity 40 and serve to re-inflate the tire 12 to a desired pressure level. A valve system to regulate the flow of air to the cavity 40, when the air pressure within the cavity falls to a prescribed level, is shown and described in US-A-2011/0272073, and incorporated herein by reference.

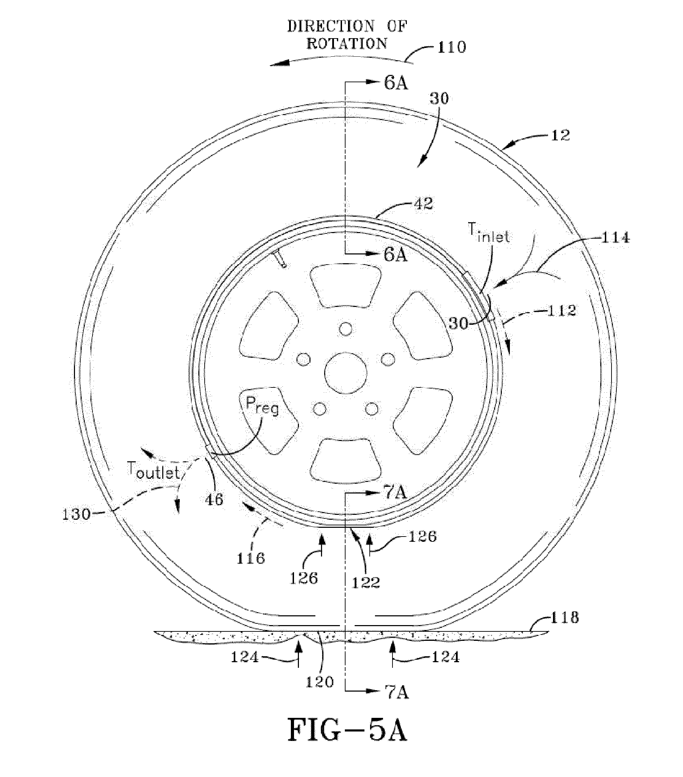

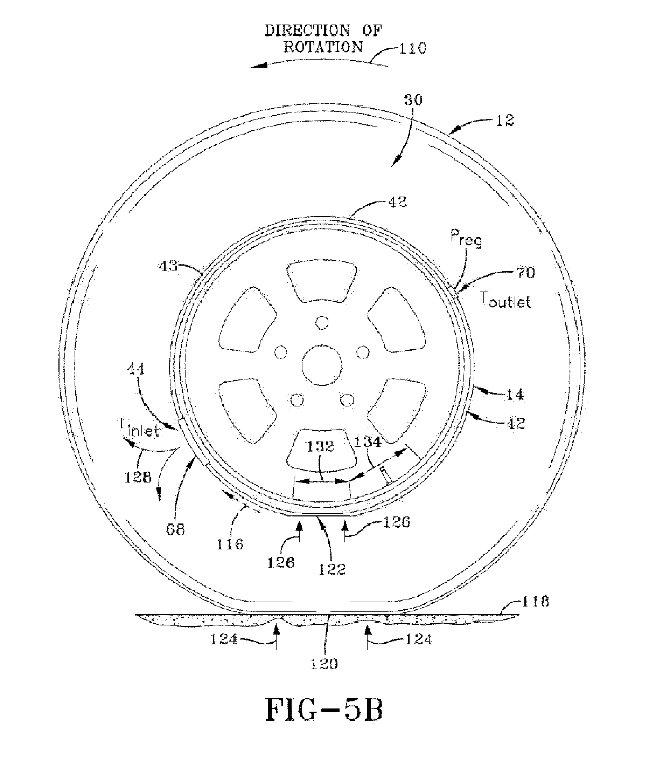

With the tire 12 rotating in direction 110, flattened tube segments may be sequentially refilled by air flowing into the inlet device 68 in the direction 114, as shown by FIG. 5A. The inflow of air into the inlet device 68, and then into the tube passageway 43, may continue until the outlet device 70, rotating in a counterclockwise direction 110, passes the tire footprint 120. FIG. 5B shows the orientation of the peristaltic pump assembly 14 in such a position. The tube 42 may continue to be sequentially flattened, segment by segment, opposite the tire footprint 120 by a compressive force 124. Air may be pumped in the clockwise direction 116 to the inlet device 68 and evacuated or exhausted external to the tire 12. Passage of exhaust air, as shown at 128, from the inlet device 68 may occur through a filter sleeve 92 exemplarily formed of a cellular or porous material or composite. Flow of air through the filter sleeve 92 and into the tube 101 may thus cleanse debris or particulates. In the exhaust or reverse flow of air direction 128, the filter sleeve 92 may be cleansed of trapped accumulated debris or particles within the porous medium. With the evacuation of pumped air out of the inlet device 68, the outlet device 70 may be in a closed position preventing air flow to the tire cavity 40. When the tire 12 rotates further in counterclockwise direction 110 until the inlet device 70 passes the tire footprint 120 (as shown in FIG. 5A), the airflow may resume to the outlet device and cause the pumped air to flow out and into the tire cavity 40. Air pressure within the tire cavity 40 may thus be maintained at a desired level.

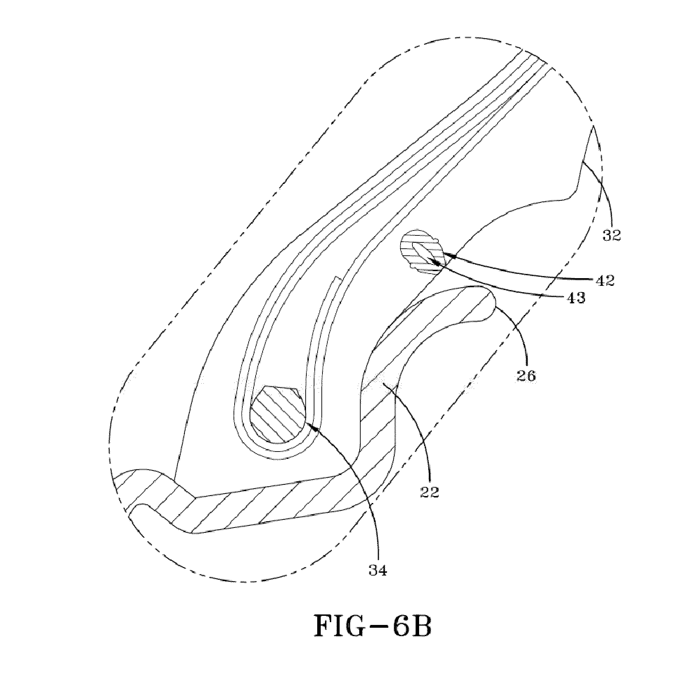

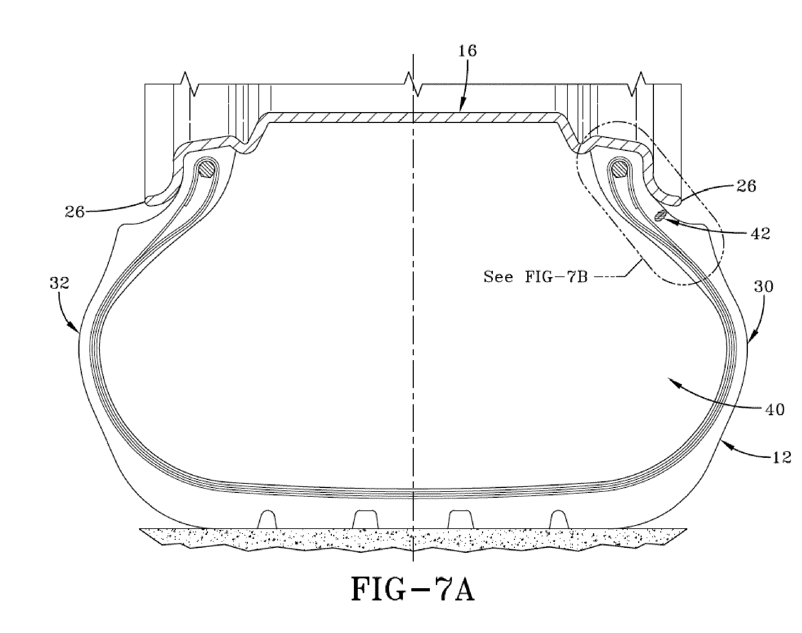

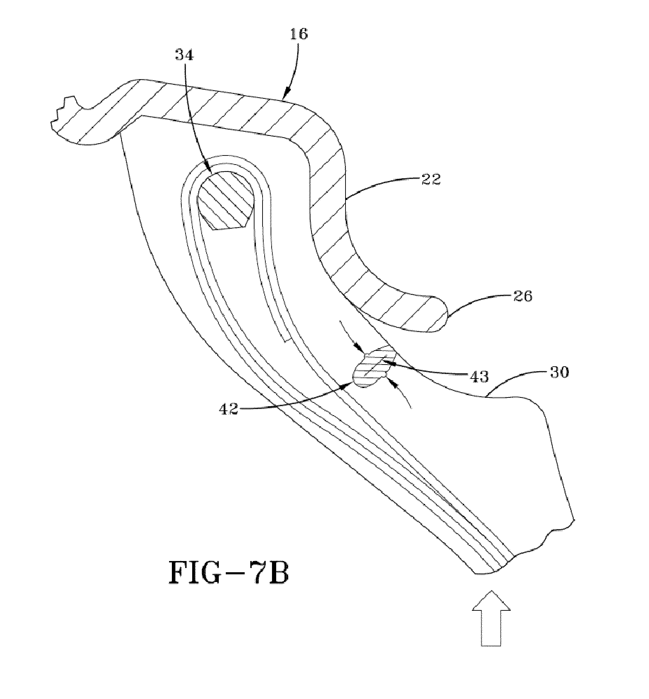

FIG. 5B illustrates that the tube 42 is flattened, segment by segment, as the tire 12 rotates in direction 110. A flattened segment 134 moves counterclockwise as it is rotated away from the tire footprint 120 while an adjacent segment 132 moves opposite the tire footprint and is flattened. Accordingly, the progression of squeezed or flattened or closed tube segments may be move air toward the outlet device 70 (FIG. 5A) or the inlet device 68 (FIG. 5B) depending on the rotational position of the tire 12 relative to such devices. As each segment is moved by tire rotation away from the footprint 120, the compression forces within the tire 12 from the footprint region may be eliminated and the segment may resiliently reconfigure into an unflattened or open condition as the segment refills with air from the passageway 43. FIGS. 7A and 7B show a segment of the tube 42 in the flattened condition while FIGS. 6A and 6B show the segment in an expanded, unflat or open configuration prior to, and after, moving away from a location opposite the tire footprint 120. In the original non-flattened configuration, segments of the tube 42 may resume the exemplary oblong generally elliptical shape.

The above-described cycle may repeat for each tire revolution, with half of each rotation resulting in pumped air moving to the tire cavity 40 and half of each rotation resulting in pumped air moving back out the filter sleeve 92 of the inlet device 68 for self-cleaning the filter. It may be appreciated that while the direction of rotation 110 of the tire 12 is as shown in FIGS. 5A and 5B is counterclockwise, the subject tire assembly 10 and its peristaltic pump assembly 14 may function in a like manner in a reverse (clockwise) direction of rotation as well. The peristaltic pump assembly 14 may accordingly be bidirectional and equally functional with the tire 12 and vehicle moving in a forward or reverse direction of rotation and forward or reverse direction of the vehicle.

The air tube/pump assembly 14 may be as shown in FIGS.5A, 5B, 6A, 6B, 7A and 7B. The tube 42 may be located within the groove 56 in a lower region of the sidewall 30 of the tire 12. The passageway 43 of the tube 42 may close by compression strain bending of the sidewall groove 56 within a rolling tire footprint 120, as explained above. The location of the tube 42 in the sidewall 30 may provide freedom of placement thereby avoiding contact between the tube 42 and the rim 16. Higher placement of the tube 42 in the sidewall groove 56 may use high deformation characteristics of this region of the sidewall as it passes through the tire footprint 120 to close the tube 42.

The configuration and operation of the grooved sidewalls, and in particular the variable pressure pump compression of the tube 42 by operation of ridges or compression ribs 66 within the groove 56 is shown in FIGS. 8A-8D, 9, 10A and 10B. The ridges or ribs are indicated by numeral 66 and individually as D0 through D6. The groove 56 may be uniform width circumferentially along the side of the tire 12 with the molded ridges D0 through D6 formed to project into the groove 56 in a preselected sequence, pattern, or array. The ridges D0 through D6 may retain the tube 42 in a predetermined orientation within the groove 56 and also may apply a variable sequential constriction force to the tube.

The uniformly dimensioned pump tube 42 may be positioned within the groove 56 as explained above - a procedure initiated by mechanically spreading the entryway D3 of the groove 56 apart. The tube 42 may then be inserted into the enlarged opening of the groove 56. The opening of the groove 56 may thereafter be released to return to close into the original spacing D3 and thereby capture the tube 42 inside the groove. The longitudinal locking ribs 52, 54 may thus be captured/locked into the longitudinal grooves 60, 62. The locking ribs 52, 54 resultingly operate to lock the tube 42 inside the groove 56 and prevent ejection of the tube from the groove 56 during tire operation/rotation.

Alternatively, the tube 42 may be press inserted into the groove 56. The tube 42, being of uniform width dimensions and geometry, may be manufactured in large quantities. Moreover, a uniform dimensioned pump tube 42 may reduce overall assembly time, material cost, and non-uniformity of tube inventory. From a reliability perspective, this results in less chance for scrap.

The circumferential ridges D0 through D6 projecting into the groove 56 may increase in frequency (number of ridges per axial groove unit of length) toward the inlet passage of the tube 42, represented by the outlet device 70. Each of the ridges D0 through D6 may have a common radius dimension R4 within a range of 0.15 mm to 0.30 mm. The spacing between ridges D0 and D1 may be largest, the spacing between D1 and D2 the next largest, and so on until the spacing between ridges D5 and D6 is nominally eliminated. While seven ridges are shown, more or fewer ridges may be deployed at various frequency along the groove 56.

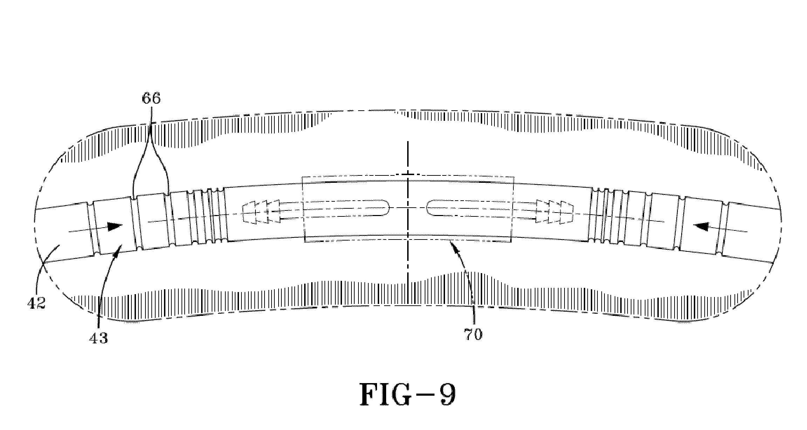

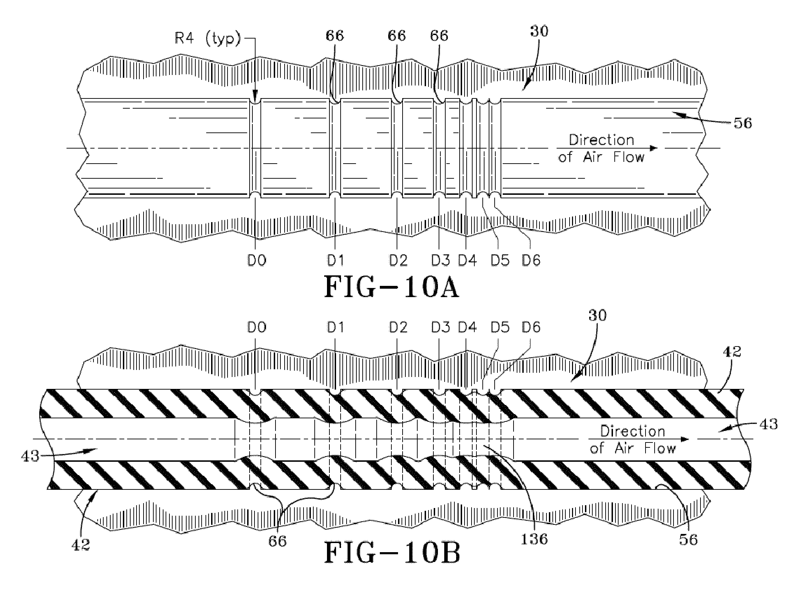

The projection of the ridges into the groove 56 by radius R4 may serve a twofold purpose. First, the ridges D0 through D6 may engage the tube 42 and prevent the tube from migrating, or "walking", along the groove 56 during tire operation/rotation from the intended location of the tube. Secondly, the ridges D0 through D6 may compress the segment of the tube 42 opposite each ridge to a greater extent as the tire 12 rotates through its rotary pumping cycle, as explained above. The flexing of the sidewall may manifest a compression force through each ridge D0 through D6 and may constrict the tube segment opposite such ridge to a greater extent than otherwise would occur in tube segments opposite non-ridged portions of the groove 56. As seen in FIGS. 10A and 10B, as the frequency of the ridges increases in the direction of air flow, a pinching of the tube passageway 43 may progressively occur until the passageway constricts to the size shown at numeral 136, gradually reducing the air volume and increasing the pressure. As a result, with the presence of the ridges, the groove 56 may provide variable pumping pressure within the tube 42 configured to have a uniform dimension therealong. As such, the sidewall groove 56 may be a variable pressure pump groove functioning to apply a variable pressure to a tube 42 situated within the groove. It will be appreciated that the degree of pumping pressure variation may be determined by the pitch or ridge frequency within the groove 56 and the amplitude of the ridges deployed relative to the diametric dimensions of the tube passageway 43. The greater the ridge amplitude relative to the diameter, the more air volume may be reduced in the tube segment opposite the ridge and pressure increased, and vice versa. FIG. 9 depicts the attachment of the tube 42 to the outlet device 70 and the direction of air flow on both sides into outlet device.

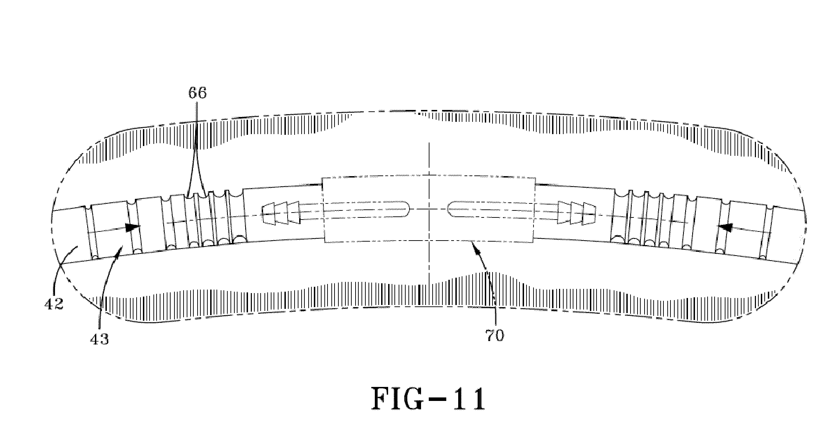

FIG. 11 shows a second alternative rib profile area located on both sides of the outlet to the outlet device 70. FIG. 12A shows an enlarged detail of the groove 56 with the alternative second rib profile and FIG. 12B shows an enlarged detail of the tube 42 pressed into the second rib profile. With reference to FIGS. 11, 12A, 12B, the ridges, or ribs, D0 through D6 in this alternative may have a frequency pattern similar to that described above in reference to FIGS. 10A, 10B, but with each rib having a unique respective amplitude as well. Each of the ribs D0 through D6 may generally have a semi-circular cross-section with a respective radius of curvature R1 through R7, respectively. The radii of curvatures of the ridges/ D0 through D6 may be within the exemplary range: Δ = 0.020 mm to 0.036 mm.

The number of ridges D0 through D6 and respective radii of each ridge may be constructed outside the above ranges to suit other dimensions or applications. The increasing radius of curvature in the direction of air flow may result in the ridges D0 through D6 projecting at an increasing amplitude and, to an increasing extent, into the passageway 43 toward the outlet device 70. As such, the passageway 43 may constrict to a narrower region 138 toward the outlet device 70 and cause a correspondingly greater increase in air pressure from a reduction in air volume. The benefit of such a configuration is that the tube 42 may be constructed smaller than otherwise necessary in order to achieve a desired air flow pressure along the passageway 43 and into the tire cavity 40 from the outlet device 70. A smaller sized tube 42 may be economically and functionally desirable in allowing a smaller groove 56 within the tire 12 to be used, thereby resulting a minimal structural discontinuity in the tire sidewall.

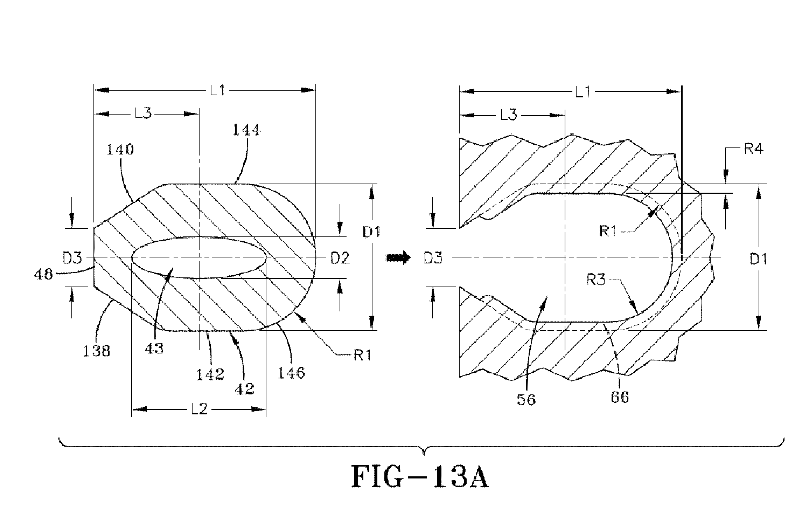

FIGS. 13A through 13C show another tube 42 and groove 56 detail in which the detent ribs 90 of FIG. 8A through 8C are eliminated as a result of rib and groove modification. This tube 42 may have an external geometry and passageway configuration with indicated dimensions within ranges specified as follows:
D1= 2.2 to 3.8 mm;
D2= 0.5 to 0.9 mm;
D3= 0.8 to 1.0 mm;
R4= 0.15 to 0.30 mm;
L1= 3.65 to 3.8 mm;
L2= 2.2 to 2.3 mm;
L3=1.8 to 2.0 mm.

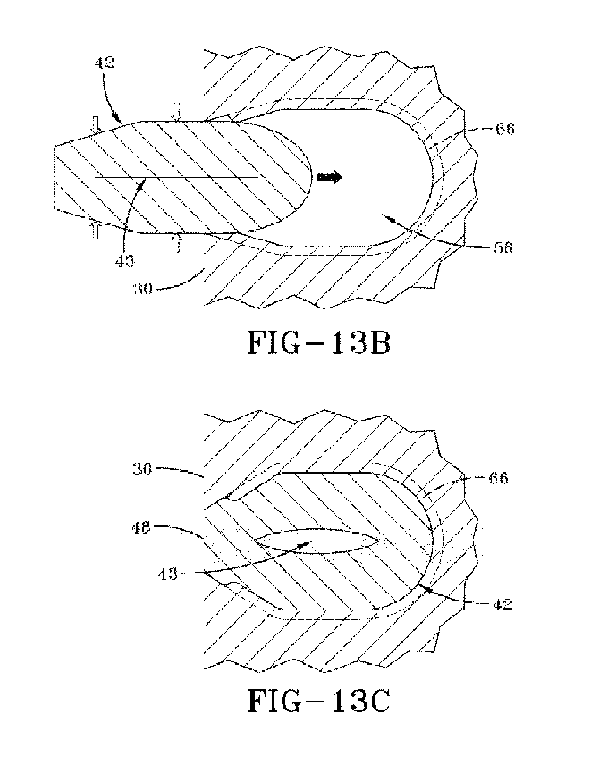

The above ranges may be modified to suit a particular dimensional preference, tire geometry, or tire application. The external configuration of the tube 42 may include beveled surfaces 138, 140 adjoining the end surface 48; parallel and opposite straight intermediate surfaces 142, 144 adjoining the beveled surfaces, respectively; and a radiused nose, or forward surface 146, adjoining the intermediate surfaces 142, 144. As seen from FIGS. 13B and 13C, the tube 42 may be compressed for press insertion into the groove 56 and, upon full insertion, expand. The constricted opening of the groove 56 at the sidewall surface may retain the tube 42 securely within the groove 56.

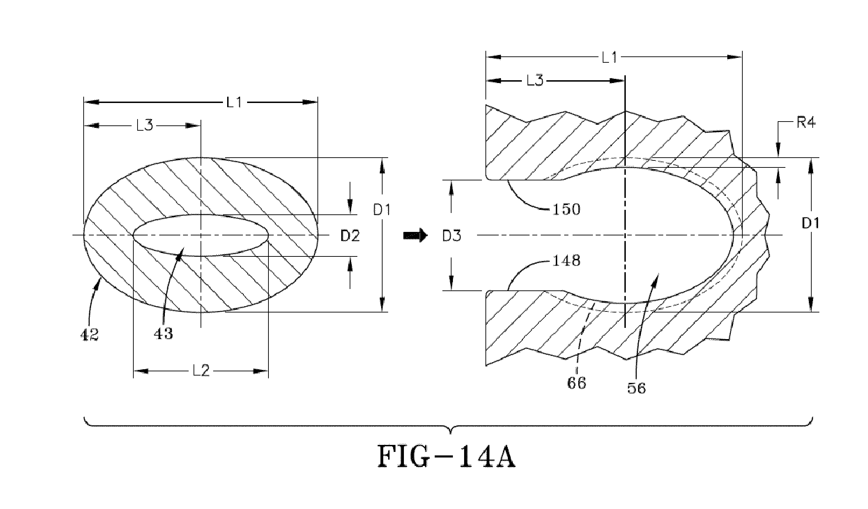

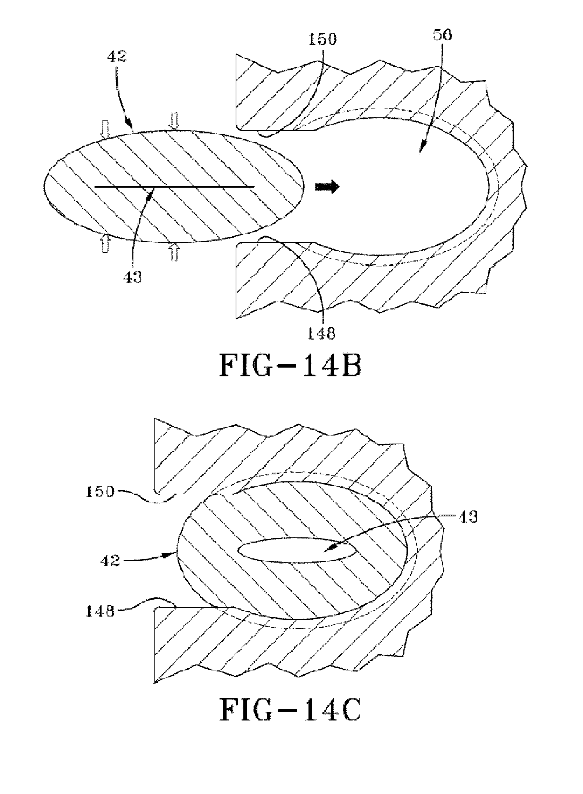

FIGS. 14A through 14C show another tube 42 and groove 56 configuration. FIG. 14A is an enlarged view and 14B is a detailed view showing the tube 42 compressed and inserted into the groove 56. FIG. 14C is a detailed view showing the tube 42 fully inserted into the groove 56. The tube 42 may be generally elliptical in cross-section inserting into a like-configured groove 56. The groove 56 may have a narrow entryway formed between opposite parallel surfaces 148, 150. In FIGS. 14A through 14C, the tube 42 is configured having an external geometry and passageway configuration with dimensions within the ranges specified as follows:
D1=2.2 to 3.8mm;
D2= 0.5 to 0.9 mm;
D3=0.8 to 1.0 mm;
R4= 0.15 to 0.30 mm;
L1= 3.65 to 3.8 mm;
L2= 2.2 to 2.3 mm;
L3= 1.8 to 2.0 mm.

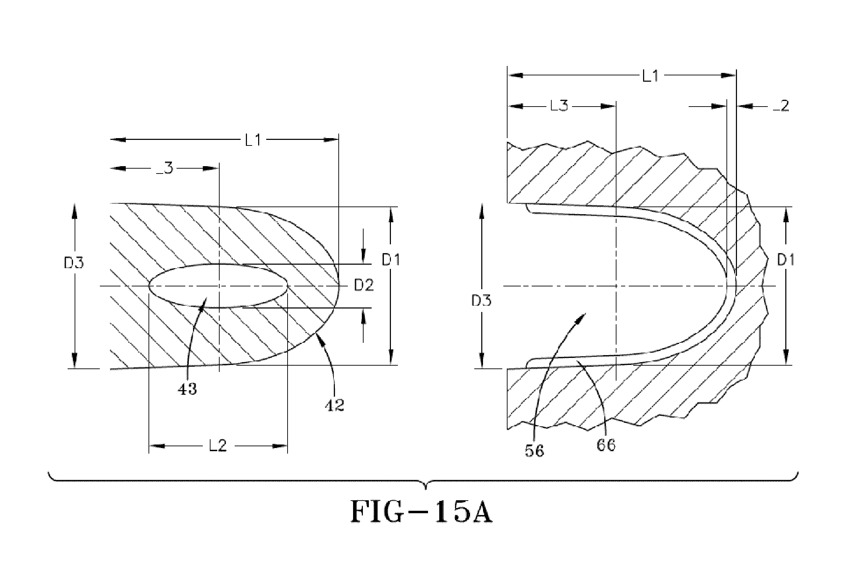

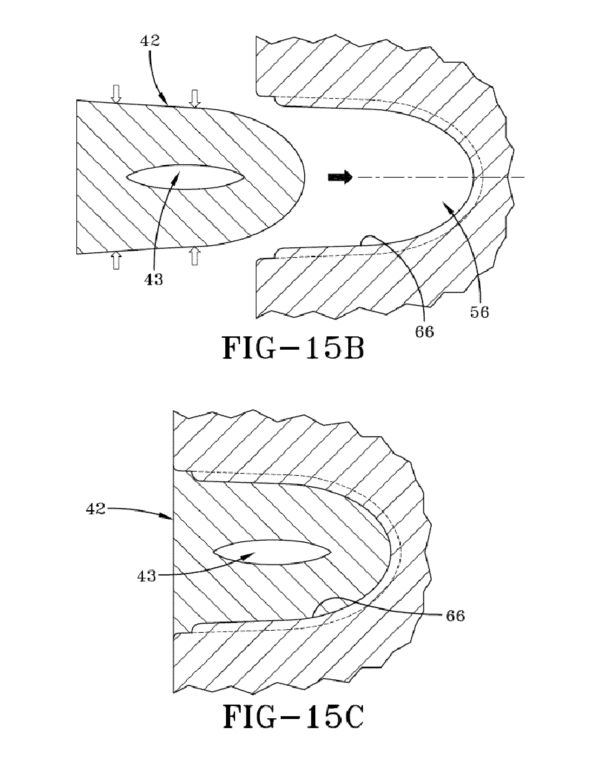

The above ranges may be modified to suit a particular dimensional preference, tire geometry, or tire application. FIGS. 15A through 15C show another tube 42 and groove 56 configuration. FIG. 15A is an enlarged view and FIG. 15B is a detailed view showing the tube 42 compressed and inserted into the groove 56. FIG. 15C is a detailed view showing the tube 42 fully inserted into the groove 56. The tube 42 may be generally have a parabolic cross-section for inserting into a like-configured groove 56. The groove 56 may have an entryway sized to closely accept the tube 42 therein. The ridges 66 may engage the tube 42 once inserted into the groove 56. In FIGS. 15A through 15C, the tube 42 has an external geometry and passageway configuration with dimensions within the ranges specified as follows:
D1= 2.2 to 3.8 mm;
D2= 0.5 to 0.9 mm;
D3= 2.5 to 4.1 mm;
L1= 3.65 to 3.8 mm;
L2= 2.2 to 2.3 mm;
L3= 1.8 to 2.0 mm.

The above ranges may be modified to suit a particular dimensional preference, tire geometry, or tire application if desired.

From the forgoing, it will be appreciated that the present invention may comprise a bi-directionally peristaltic pump assembly 14 for air maintenance of a tire 12. The circular air tube 42 may flatten, segment by segment, and close in the tire footprint 100. The air inlet device 68 may include an outer filter sleeve 92 formed of porous cellular material and thereby render the air inlet device 68 self-cleaning. The outlet device 70 may employ a valve unit (see US-A-2011/0272073, incorporated herein by reference). The peristaltic pump assembly 14 may pump air through rotation of the tire 12 in either direction, one half of a revolution pumping air to the tire cavity 40 and the other half of a revolution pumping air back out of the inlet device 68. The peristaltic pump assembly 14 may be used with a secondary tire pressure monitoring system (TPMS) (not shown) that may serve as a system fault detector. The TPMS may be used to detect any fault in the self-inflation system of the tire assembly 10 and alert the user of such a condition.

The tire air maintenance system 10 may further incorporate a variable pressure pump groove 56 with one or more inwardly directed ridges or ribs 66 engaging and compressing a segment of the air tube 42 opposite such rib(s). The pitch or frequency of the ribs may increase toward the outlet device 70 for gradually reducing air volume within the passageway 43 by compressing the tube 42. The reduction in air volume may increase air pressure within the passageway 43 and thereby facilitate a more efficient air flow from the tube 42 into the tire cavity 40. The increase in tube pressure may be achieved by engagement by the ribs 66 of the groove 56 and the tube 42 having uniform dimensions along the tube length. The tube 42 may thus be made of uniform dimension and of relatively smaller size without compromising the flow pressure of air to the tire cavity 40 for maintaining air pressure. The pitch and amplitude of the ridges 66 may both be varied to better achieve the desired pressure increase within the passageway 43.

Structures in a pneumatic tire may require the embedding of certain rigid parts, functional devices, and/or connectors into adhering onto the rubber of the tire. For example, the structures 14, 42, 68, 70, 101 of the example air maintenance tire 10 described above may require embedding/adherence. Such structures 14, 42, 68, 70, 101 typically encounter high stresses during operating conditions of the tire 10. Thus, strong bonding of such structures 14, 42, 68, 70, 101 is desired since a bond break at the structure's 14, 42, 68, 70, 101 surface will likely lead to destruction of the assembly 14 and/or the integrity of the tire 12 as a whole.

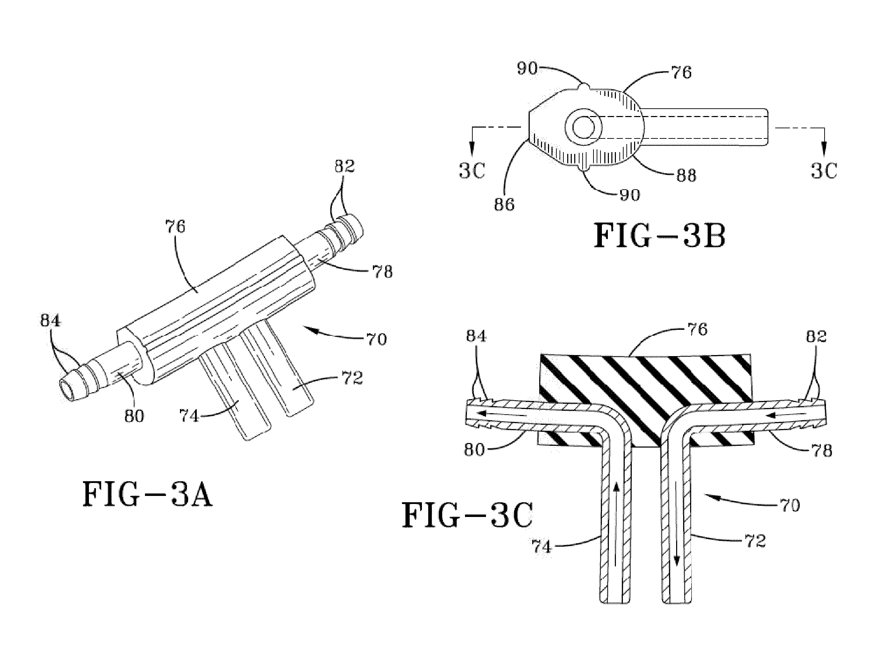

For example, a polyamide elbow-like structure 70 may be bonded to a tire 10 in order to define a built-in tube-like cavity (FIG. 3C). This structure 70 may thereby allow rerouting of pressurized air to a pump assembly 14 and from there, into a tire cavity 40, as well as to make a connection to the outside for providing fresh unpressurized air to the pump assembly.

In order to optimally bond such structures 14, 42, 68, 70, 101 to a tire 12, a subcoat and a topcoat may be applied to the structures. In accordance with the present invention, a compound cement of high stiffness may bond each structure 14, 42, 68, 70, 101 to the tire 10 by creating a stiffness gradient from the structure to a less stiff repair gum that may be used to close the tube-like cavity dedicated to each structure. Such bond may be achieved by a subcoat, dried at 180C for 8 min under air to a polyamide surface of the structure 14, 42, 68, 70, 101 by a topcoat, dried at 180C for 8 min under air over the subcoat, and a cement prepared from a homogenous slurry in a solvent (e.g. tetrahydrofurane) over the topcoat. This approach may bond polyamide structures 14, 42, 68, 70, 101 as well as other thermoplastic structures.

Such bonds may be utilized for the structures 14, 42, 68, 70, 101 described above (e.g., a built-in peristaltic pump approach, etc.), a core coating for valve cavities as described above, a core coating for particular hollow, rubber structures, etc. Further, such bonds may secure thermoplastic structures to rubber by application to green repair rubber prior to a post-cure step.

The structures 14, 42, 68, 70, 101 may be treated with an aqueous emulsion comprising a polyepoxide, followed by treating the structures with an aqueous RFL emulsion comprising a resorcinol-formaldehyde resin, a styrene-butadiene copolymer latex, a vinylpyridine-styrene-butadiene terpolymer latex, and a blocked isocyanate. The structures 14, 42, 68, 70, 101 may also be treated with an RFL (Resorcinol-Formaldehyde-Latex) dip. An adhesion activator, typically comprising a polyepoxide, may serve to improve adhesion of the structures 14, 42, 68, 70, 101 to rubber compounds after a structure is dipped with an RFL dip. Such approaches may not be robust against long and/or high temperature cures in compounds that contain traces of humidity and amines, which may attack the skin of the structures and degrade the adhesive/structure interface. One sign of failure may be a nude structure 14, 42, 68, 70, 101 showing only traces of adhesive left on it.

The structures 14, 42, 68, 70, 101 may be treated with polyepoxide. The structures 14, 42, 68, 70, 101 may then be dipped in an aqueous dispersion of a polyepoxide, also referred to herein as an epoxy or epoxy compound. The structures 14, 42, 68, 70, 101 may be formed structures that have been treated with sizing or adhesives. Thus, the structures 14, 42, 68, 70, 101 may also be subsequently treated using conventional methods.

As a polyepoxide, use may be made of reaction products between an aliphatic polyalcohol, such as glycerine, propylene glycol, ethylene glycol, hexane triol, sorbitol, trimethylol propane, 3-methylpentanetriol, poly(ethylene glycol), poly(propylene glycol) etc., and a halohydrine, such as epichlorohydrin, reaction products between an aromatic polyalcohol such as resorcinol, phenol, hydroquinoline, phloroglucinol bis(4-hydroxyphenyl)methane and a halohydrin, reaction products between a novolac-type phenolic resin such as a novolac type phenolic resin, and/or a novolac-type resorcinol resin and halohydrin. The polyepoxide may be derived from an ortho-cresol formaldehyde novolac resin.

The polyepoxide may be used as an aqueous dispersion of a fine particle polyepoxide. The polyepoxide may be present in the aqueous dispersion in a concentration range from 1 percent by weight to 5 percent by weight. The polyepoxide may be present in the aqueous dispersion in a concentration range from 1 percent by weight to 3 percent by weight. In a first treatment step, dry polyester structures 14, 42, 68, 70, 101 may be dipped in the aqueous polyepoxide dispersion. The structures 14, 42, 68, 70, 101 may be dipped for a time sufficient to allow a dip pick up, or DPU, of between 0.3 percent by weight and 0.7 percent by weight of polyepoxide. The DPU may be between 0.4 percent by weight and 0.6 percent by weight. The DPU may be defined as a dipped cord structure weight (after drying or curing of the dipped structure) minus the undipped structure weight, then divided by the undipped structure weight. The structures 14, 42, 68, 70, 101 may be treated in the aqueous polyepoxide dispersion in a continuous process by drawing the structures through a dispersion bath, or by soaking the structures in batch. After dipping in the polyepoxide dispersion, the structures 14, 42, 68, 70, 101 may be conventionally dried or cured to remove the excess water.

In a second treatment step, the polyepoxide treated structures 14, 42, 68, 70, 101 may be dipped in a modified RFL liquid. The adhesive composition may comprise: (1) resorcinol, (2) formaldehyde and (3) a styrene-butadiene rubber latex, (4) a vinylpyridine-styrene-butadiene terpolymer latex, and (5) a blocked isocyanate. The resorcinol may react with formaldehyde to produce a resorcinol-formaldehyde reaction product. This reaction product may be the result of a condensation reaction between a phenol group on the resorcinol and an aldehyde group on the formaldehyde. Resorcinol may resole and resorcinol-phenol may resole, whether formed in situ within the latex or formed separately in aqueous solution, may be considerably superior to other condensation products in the adhesive mixture.

The resorcinol may be dissolved in water, to which around 37 percent formaldehyde has been added, together with a strong base, such as sodium hydroxide. The strong base may generally constitute around 7.5 percent or less of the resorcinol, and the molar ratio of formaldehyde to resorcinol may be from 1.5 to 2. The aqueous solution of the resole or condensation product or resin may be mixed with the styrene-butadiene latex and vinylpyridine-styrene-butadiene terpolymer latex. The resole or other mentioned condensation product or materials that form the condensation product may constitute from 5 parts to 40 parts, or around 10 parts to 28 parts, solids of the latex mixture. The condensation product forming the resole or resole type resin forming materials may be partially reacted or fully reacted so as to be only partially soluble in water. Sufficient water may then be added to produce around 12 percent to 18 percent by weight overall solids in a final dip. The weight ratio of the polymeric solids from the latex to the resorcinol/formaldehyde resin may be in a range of 2 to 6.

The RFL adhesive may also include a blocked isocyanate. In one form, from 1 part by weight to 8 parts by weight of solids of blocked isocyanate may be added to the adhesive. The blocked isocyanate may be any suitable blocked isocyanate, known to be used in RFL adhesive dips, including, but not limited to, caprolactam blocked methylene-bis-(4-phenylisocyanate), such as Grilbond-IL6 available from EMS American Grilon, Inc., and phenol formaldehyde blocked isocyanates as disclosed in US-A-3,226,276, US-A-3,268,467, and US-A-3,298,984. As a blocked isocyanate, use may be made of reaction products between one or more isocyanates and one or more kinds of isocyanate blocking agent. The isocyanates may include monoisocyanates, such as phenyl isocyanate, dichlorophenyl isocyanate, and naphthalene monoisocyanate; diisocyanate, such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc.; and triisocyanates, such as triphenylmethane triisocyanate and diphenylmethane triisocyanate. The isocyanate-blocking agents may include phenols, such as phenol, cresol, and resorcinol; tertiary alcohols, such as t-butanol and t-pentanol; aromatic amines, such as diphenylamine, diphenylnaphthylamine and xylidine; ethyleneimines, such as ethylene imine and propyleneimine; imides, such as succinic acid imide and phthalimide; lactams, such as epsilon-caprolactam, delta-valerolactam, and butyrolactam; ureas, such as urea and diethylene urea; and oximes, such as acetoxime, cyclohexanoxime, benzophenon oxime, and alpha-pyrolidon.

The polymers may be added in the form of a latex or otherwise. In one form, a vinylpyridine-styrene-butadiene terpolymer latex and styrene-butadiene rubber latex may be added to the RFL adhesive. The vinylpyridiene-styrene-butadiene terpolymer may be present in the RFL adhesive such that the solid weight of the vinylpyridiene-styrene-butadiene terpolymer is from 50 percent to 100 percent of the solid weight of the styrene-butadiene rubber; in other words, the weight ratio of vinylpyridiene-styrene-butadiene terpolymer to styrene-butadiene rubber may be from 1 to 2.

It may be preferable to first prepare the polymer latex and then add the partially condensed condensation product. However, the ingredients (the resorcinol and formaldehyde) may be added to the polymer latex in the uncondensed form and the entire condensation may then take place in situ. The latex may keep longer and be more stable if it is kept at an alkaline pH level.

The polyepoxide treated structures 14, 42, 68, 70, 101 may be dipped from one second to three seconds in the RFL dip and dried at a temperature within the range from 120°C to 265°C for 0.5 minutes to 4.0 minutes and thereafter placed in the rubber and cured therewith. The drying step utilized may be carried out by passing the structures 14, 42, 68, 70, 101 through 2 or more drying ovens, which may be maintained at progressively higher temperatures. For example, the structures 14, 42, 68, 70, 101 may be dried by passing them through a first drying oven, which is maintained at a temperature of 121°C to 149°C, and then to a second oven, which is maintained at a temperature of 177°C to 260°C. It should be appreciated that these temperatures are oven temperatures rather than the temperature of the structures 14, 42, 68, 70, 101 being dried. The structures 14, 42, 68, 70, 101 may have a total residence time in the drying ovens within the range of 1 minute to 5 minutes. For example, a residence time of 30 seconds to 90 seconds in the first oven, and 30 seconds to 90 seconds in the second oven, may be employed.

## Claims

1. A pneumatic tire comprising:
a cavity (40), a first and a second sidewall (30, 32) extending respectively from a first and a second tire bead region (34, 36) to a tire tread region (38), the first sidewall having at least one bending region operatively bending when radially within a rolling tire footprint (120);
a sidewall groove (56) defined by groove walls positioned within the bending region of the first tire sidewall (30), the sidewall groove (56) operatively deforming segment by segment between a non-deformed state and a deformed, constricted state in response to a bending of the bending region of the first sidewall (30) while radially within the rolling tire footprint (120);
an air passageway (43) defined by the sidewall groove or located within the sidewall groove (56) and operatively deforming segment by segment between an expanded condition and an at least partially collapsed condition in response to respective segment by segment deformation of the sidewall groove (56) when radially within the rolling tire footprint (120); and
a rigid structure (14, 42, 68, 70, 101) wherein the rigid structure (14, 42, 68, 70, 101) is bonded to the tire (12) by a compound cement.

2. The pneumatic tire of claim 1 wherein the compound cement is a compound cement of a high stiffness such that a stiffness gradient is created between the rigid structure (14, 42, 68, 70, 101) and the tire (12).

3. The pneumatic tire as set forth in claim 1 or 2 wherein the rigid structure (14, 42, 68, 70, 101) is constructed of polyamide.

4. The pneumatic tire as set forth in at least one of the previous claims wherein the rigid structure (14, 42, 68, 70, 101) and the tire define a built-in tube-like cavity.

5. The pneumatic tire as set forth in at least one of the previous claims wherein the rigid structure (14, 42, 68, 70, 101) and the tire (12) reroute pressurized air to a pump assembly and from there, into the cavity (40).

6. The pneumatic tire as set forth in at least one of the previous claims further including a subcoat applied to a bare surface of the rigid structure (14, 42, 68, 70, 101).

7. The pneumatic tire as set forth in claim 6 further including a topcoat applied to the subcoat.

8. The pneumatic tire as set forth in claim 6 or 7 wherein the compound cement is applied to the topcoat or to the subcoat.

9. The pneumatic tire as set forth in at least one of the previous claims further including a separate tube (42) within the sidewall groove (56), the separate tube defining a circular air passageway.

10. The pneumatic tire as set forth in claim 9 wherein the separate tube (42) has an outer profile corresponding to an inner profile of the sidewall groove (56).

11. The pneumatic tire as set forth in at least one of the previous claims wherein the rigid structure comprises a plurality of check valves disposed at multiple arcuate positions about the sidewall groove (56).

12. The pneumatic tire as set forth in at least one of the previous claims wherein the compound cement secures the separate tube (42) within the sidewall groove (56), the compound cement further securing the plurality of check valves to the separate tube (42).

13. A method of manufacturing a pneumatic tire, the method comprising:
providing a tire (12) having a cavity (40), a first and a second sidewall (30, 32) extending respectively from a first and a second tire bead region (34, 36) to a tire tread region (38), the first sidewall having at least one bending region operatively bending when radially within a rolling tire footprint (120), a sidewall groove (56) defined by groove walls positioned within the bending region of the first tire sidewall (30), the sidewall groove (56) operatively deforming segment by segment between a non-deformed state and a deformed, constricted state in response to a bending of the bending region of the first sidewall (30) while radially within the rolling tire footprint (120), an air passageway (43) defined by the sidewall groove or located within the sidewall groove (56) and operatively deforming segment by segment between an expanded condition and an at least partially collapsed condition in response to respective segment by segment deformation of the sidewall groove (56) when radially within the rolling tire footprint (120);
providing a rigid structure (14, 42, 68, 70, 101) for bonding the rigid structure (14, 42, 68, 70, 101) to the tire (12); and
bonding the rigid structure (14, 42, 68, 70, 101) to the tire (12) by a compound cement.

14. The method of claim 13, further comprising the steps of:
applying a subcoat to a bare surface of the rigid structure (14, 42, 68, 70, 101) prior to bonding the rigid structure (14, 42, 68, 70, 101) to the tire (12) by the compound cement;
optionally applying a topcoat on the subcoat; and
applying the compound cement over the subcoat or, if present, over the topcoat.

15. The method of claim 13 or 14 wherein the compound cement is prepared from a homogenous slurry in a solvent.
